# EUROPEAN PATENT SPECIFICATION

(11) **EP 2 791 396 B1**
(45) Date of publication and mention of the grant of the patent: **14.12.2016**
(21) Application number: 12773482.0
(22) Date of filing: 09.10.2012
(51) Int. Cl.: C25D 13/04, C25D 13/20, C23C 28/02, C09D 5/44

(54) **RESIN BASED POST RINSE FOR IMPROVED THROWPOWER OF ELECTRODEPOSITABLE COATING COMPOSITIONS ON PRETREATED METAL SUBSTRATES**
HARZ BASIERTE NACHSPÜLUNG ZUR VERBESSERTEN DURCHFLUSSRATE VON ELEKTROLYTISCH AUFBRINGBAREN BESCHICHTUNGSZUSAMMENSETZUNGEN AUF VORBEHANDELTE SUBSTRATE
POST RINÇAGE À BASE DE RÉSINE POUR UN MEILLEUR POUVOIR DE PÉNÉTRATION DE COMPOSITIONS DE REVÊTEMENT À PLAQUER ÉLECTROLYTIQUEMENT SUR DES SUBSTRATS MÉTALLIQUES PRÉTRAITÉS

(30) Priority: 13.12.2011 US 201113323926
(43) Date of publication of application: 22.10.2014
(73) Proprietor: PPG Industries Ohio, Inc., Cleveland, OH 44111 (US)
(72) Inventor: SILVERNAIL, Nathan J., Allison Park Pennsylvania 15101 (US); PERRINE, Steven D., Allison Park Pennsylvania 15101 (US); PAWLIK, Michael J., Glenshaw Pennsylvania 15116 (US); KARABIN, Richard F., Ruffs Dale Pennsylvania 15679 (US)
(74) Representative: f & e patent
(86) International application number: PCT/US2012/059306
(87) International publication number: WO 2013/089903

(56) References cited:
- EP-A2- 0 138 051
- WO-A1-96/38234
- WO-A2-2005/069877
- US-A- 4 259 163
- US-A1- 2010 159 258
- US-A1- 2010 285 334

## Description

### STATEMENT REGARDING FEDERALLY SPONSORED RESEARCH

This invention was made with Government support under Contract No. W15QKN-07-C-0048 awarded by the ARDEC. The United States Government may have certain rights in this invention.

### FIELD OF THE INVENTION

The present invention relates to methods for coating a metal substrate, including ferrous substrates, such as cold rolled steel and electrogalvanized steel. The present invention also relates to coated metal substrates.

### BACKGROUND INFORMATION

The use of protective coatings on metal substrates for improved corrosion resistance and paint adhesion is common. Conventional techniques for coating such substrates include techniques that involve pretreating the metal substrate with a phosphate conversion coating and chrome-containing rinses. The use of such phosphate and/or chromate-containing compositions, however, imparts environmental and health concerns. As a result, chromate-free and/or phosphate-free pretreatment compositions have been developed. Such compositions are generally based on chemical mixtures that in some way react with the substrate surface and bind to it to form a protective layer. For example, pretreatment compositions based on a group IIIB or IVB metal compound have recently become more prevalent.

After pretreating the substrates with pretreatment compositions, it is also common to subsequently contact the pretreated substrates with an electrodepositable coating composition. Both cationic and anionic electrodepositions are used commercially, with cationic being more prevalent in applications desiring a high level of corrosion protection. As with all electrodepositable coating compositions, it is highly desirable to increase their respective throwpowers to allow the electrodepositable coating compositions to be deposited in recessed areas of the pretreated substrates without otherwise adversely affecting the performance characteristics of the coated substrates.

### SUMMARY OF THE INVENTION

In certain respects, the present invention is directed to a method for treating a metal substrate comprising: (a) contacting the substrate with a pretreatment solution comprising a group IIIB and/or IVB metal and an electropositive metal; (b) contacting the substrate with an anionic resin-based post rinse composition; and (c) electrophoretically depositing a cationic electrodepositable coating composition onto the substrate.

In still other respects, the present invention is directed to methods for treating a metal substrate comprising contacting the substrate (a) contacting the substrate with a pretreatment solution comprising a group IIIB and/or IVB metal and an electropositive metal; (b) contacting the substrate with an cationic resin-based post rinse composition; and (c) electrophoretically depositing an anionic electrodepositable coating composition onto the substrate.

### DETAILED DESCRIPTION OF THE INVENTION

For purposes of the following detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances.

As previously mentioned, certain embodiments of the present invention are directed to methods for treating a metal substrate. Suitable metal substrates for use in the present invention include those that are often used in the assembly of automotive bodies, automotive parts, and other articles, such as small metal parts, including fasteners, *i.e.,* nuts, bolts, screws, pins, nails, clips, buttons, and the like. Specific examples of suitable metal substrates include, but are not limited to, cold rolled steel, hot rolled steel, steel coated with zinc metal, zinc compounds, or zinc alloys, such as electrogalvanized steel, hot-dipped galvanized steel, galvannealed steel, and steel plated with zinc alloy. Also, aluminum alloys, aluminum plated steel and aluminum alloy plated steel substrates may be used. Other suitable non-ferrous metals include copper and magnesium, as well as alloys of these materials. Moreover, the bare metal substrate being coating by the methods of the present invention may be a cut edge of a substrate that is otherwise treated and/or coated over the rest of its surface. The metal substrate coated in accordance with the methods of the present invention may be in the form of, for example, a sheet of metal or a fabricated part.

The substrate to be treated in accordance with the methods of the present invention may first be cleaned to remove grease, dirt, or other extraneous matter. This is often done by employing mild or strong alkaline cleaners, such as are commercially available and conventionally used in metal pretreatment processes. Examples of alkaline cleaners suitable for use in the present invention include Chemkleen 163, Chemkleen 177, and Chemkleen 490MX, each of which are commercially available from PPG Industries, Inc. Such cleaners are often followed and/or preceded by a water rinse.

As previously indicated, certain embodiments of the present invention are directed to methods treating a metal substrate that comprise contacting the metal substrate with a pretreatment composition comprising a group IIIB and/or IVB metal. As used herein, the term "pretreatment composition" refers to a composition that upon contact with the substrate reacts with and chemically alters the substrate surface and binds to it to form a protective layer.

Often, the pretreatment composition comprises a carrier, often an aqueous medium, so that the composition is in the form of a solution or dispersion of a group IIIB or IVB metal compound in the carrier. In these embodiments, the solution or dispersion may be brought into contact with the substrate by any of a variety of known techniques, such as dipping or immersion, spraying, intermittent spraying, dipping followed by spraying, spraying followed by dipping, brushing, or roll-coating. In certain embodiments, the solution or dispersion when applied to the metal substrate is at a temperature ranging from 60 to 150°F. (15 to 65°C.). The contact time is often from 10 seconds to five minutes, such as 30 seconds to 2 minutes.

As used herein, the term "group IIIB and/or IVB metal" refers to an element that is in group IIIB or group IVB of the CAS Periodic Table of the Elements as is shown, for example, in the Handbook of Chemistry and Physics, 63^{rd} edition (1983). Where applicable, the metal themselves may be used. In certain embodiments, a group IIIB and/or IVB metal compound is used. As used herein, the term "group IIIB and/or IVB metal compound" refers to compounds that include at least one element that is in group IIIB or group IVB of the CAS Periodic Table of the Elements.

In certain embodiments, the group IIIB and/or IVB metal compound used in the pretreatment composition is a compound of zirconium, titanium, hafnium, yttrium, cerium, or a mixture thereof. Suitable compounds of zirconium include, but are not limited to, hexafluorozirconic acid, alkali metal and ammonium salts thereof, ammonium zirconium carbonate, zirconyl nitrate, zirconium carboxylates and zirconium hydroxy carboxylates, such as hydrofluorozirconic acid, zirconium acetate, zirconium oxalate, ammonium zirconium glycolate, ammonium zirconium lactate, ammonium zirconium citrate, and mixtures thereof. Suitable compounds of titanium include, but are not limited to, fluorotitanic acid and its salts. A suitable compound of hafnium includes, but is not limited to, hafnium nitrate. A suitable compound of yttrium includes, but is not limited to, yttrium nitrate. A suitable compound of cerium includes, but is not limited to, cerous nitrate.

In certain embodiments, the group IIIB and/or IVB metal compound is present in the pretreatment composition in an amount of at least 10 ppm metal, such as at least 100 ppm metal, or, in some cases, at least 150 ppm metal. In certain embodiments, the group IIIB and/or IVB metal compound is present in the pretreatment composition in an amount of no more than 5000 ppm metal, such as no more than 300 ppm metal, or, in some cases, no more than 250 ppm metal. The amount of group IIIB and/or IVB metal in the pretreatment composition can range between any combination of the recited values inclusive of the recited values.

In certain embodiments, the pretreatment composition also comprises an electropositive metal. As used herein, the term "electropositive metal" refers to metals that are more electropositive than the metal substrate. This means that, for purposes of the present invention, the term "electropositive metal" encompasses metals that are less easily oxidized than the metal of the metal substrate. As will be appreciated by those skilled in the art, the tendency of a metal to be oxidized is called the oxidation potential, is expressed in volts, and is measured relative to a standard hydrogen electrode, which is arbitrarily assigned an oxidation potential of zero. The oxidation potential for several elements is set forth in the table below. An element is less easily oxidized than another element if it has a voltage value, E*, in the following table, that is greater than the element to which it is being compared.

| Element | Half-cell reaction | Voltage, E* |
|---|---|---|
| Potassium | K⁺+e → K | -2.93 |
| Calcium | Ca²⁺ + 2e → Ca | -2.87 |
| Sodium | Na⁺ + e → Na | -2.71 |
| Magnesium | Mg²⁺ + 2e → Mg | -2.37 |
| Aluminum | Al³⁺ + 3e → Al | -1.66 |
| Zinc | Zn²⁺ + 2e → Zn | -0.76 |
| Iron | Fe²⁺ + 2e → Fe | -0.44 |
| Nickel | Ni²⁺ + 2e → Ni | -0.25 |
| Tin | Sn²⁺ + 2e → Sn | -0.14 |
| Lead | Pb²⁺ + 2e → Pb | -0.13 |
| Hydrogen | 2H⁺ + 2e → H₂ | -0.00 |
| Copper | Cu²⁺ + 2e → Cu | 0.34 |
| Mercury | Hg₂²⁺ + 2e → 2Hg | 0.79 |
| Silver | Ag⁺ + e → 4Ag | 0.80 |
| Gold | Au³⁺ + 3e → Au | 1.50 |

Thus, as will be apparent, when the metal substrate comprises one of the materials listed earlier, such as cold rolled steel, hot rolled steel, steel coated with zinc metal, zinc compounds, or zinc alloys, hot-dipped galvanized steel, galvannealed steel, steel plated with zinc alloy, aluminum alloys, aluminum plated steel, aluminum alloy plated steel, magnesium and magnesium alloys, suitable electropositive metals for deposition thereon in accordance with the present invention include, for example, nickel, copper, silver, and gold, as well mixtures thereof.

In certain embodiments, the source of electropositive metal in the pretreatment composition is a water soluble metal salt. In certain embodiments of the present invention, the water soluble metal salt is a water soluble copper compound. Specific examples of water soluble copper compounds, which are suitable for use in the present invention include, but are not limited to, copper cyanide, copper potassium cyanide, copper sulfate, copper nitrate, copper pyrophosphate, copper thiocyanate, disodium copper ethylenediaminetetraacetate tetrahydrate, copper bromide, copper oxide, copper hydroxide, copper chloride, copper fluoride, copper gluconate, copper citrate, copper lauroyl sarcosinate, copper formate, copper acetate, copper propionate, copper butyrate, copper lactate, copper oxalate, copper phytate, copper tartarate, copper malate, copper succinate, copper malonate, copper maleate, copper benzoate, copper salicylate, copper aspartate, copper glutamate, copper fumarate, copper glycerophosphate, sodium copper chlorophyllin, copper fluorosilicate, copper fluoroborate and copper iodate, as well as copper salts of carboxylic acids in the homologous series formic acid to decanoic acid, copper salts of polybasic acids in the series oxalic acid to suberic acid, and copper salts of hydroxycarboxylic acids, including glycolic, lactic, tartaric, malic and citric acids.

When copper ions supplied from such a water-soluble copper compound are precipitated as an impurity in the form of copper sulfate, copper oxide, etc., it may be preferable to add a complexing agent that suppresses the precipitation of copper ions, thus stabilizing them as a copper complex in the solution.

In certain embodiments, the copper compound is added as a copper complex salt such as K₃Cu(CN)₄ or Cu-EDTA, which can be present stably in the composition on its own, but it is also possible to form a copper complex that can be present stably in the composition by combining a complexing agent with a compound that is difficultly soluble on its own. Examples thereof include a copper cyanide complex formed by a combination of CuCN and KCN or a combination of CuSCN and KSCN or KCN, and a Cu-EDTA complex formed by a combination of CuSO₄ and EDTA.2Na.

With regard to the complexing agent, a compound that can form a complex with copper ions can be used; examples thereof include inorganic compounds, such as cyanide compounds and thiocyanate compounds, and polycarboxylic acids, and specific examples thereof include ethylenediaminetetraacetic acid, salts of ethylenediaminetetraacetic acid, such as dihydrogen disodium ethylenediaminetetraacetate dihydrate, aminocarboxylic acids, such as nitrilotriacetic acid and iminodiacetic acid, oxycarboxylic acids, such as citric acid and tartaric acid, succinic acid, oxalic acid, ethylenediaminetetramethylenephosphonic acid, and glycine.

In certain embodiments, the electropositive metal, such as copper, is included in the pretreatment compositions in an amount of at least 1 ppm, such as at least 5 ppm, or in some cases, at least 10 ppm of total metal (measured as elemental metal). In certain embodiments, the electropositive metal is included in such pretreatment compositions in an amount of no more than 500 ppm, such as no more than 100 ppm, or in some cases, no more than 50 ppm of total metal (measured as elemental metal). The amount of electropositive metal in the pretreatment composition can range between any combination of the recited values inclusive of the recited values.

In some embodiments, the pretreatment composition may be a silane or a non-crystalline phosphate, such as iron phosphate, containing pretreatment composition. Suitable silane containing pretreatment compositions include, but are not limited to, certain commercially available products, such as Silquest A-1100 Silane, which is described in the Examples herein and which is commercially available from Momentive Performance Materials. Suitable non-crystalline phosphate containing pretreatment composition include pretreatment composition that comprise, iron phosphate, manganese phosphate, calcium phosphate, magnesium phosphate, cobalt phosphate, or an organophosphate and/or organophosphonate, such as is disclosed in United States Patent Nos. 5,294,265 at col. 1, line 53 to col. 3, line 12 and 5,306,526 at col. 1, line 46 to col. 3, line 8. Suitable non-crystalline phosphate containing pretreatment compositions are commercially available, such as Chemfos® 158 and Chemfos® 51, which are iron phosphate pretreatment compositions commercially available from PPG Industries, Inc.

In certain embodiments, the pretreatment composition comprises a resinous binder. Suitable resins include reaction products of one or more alkanolamines and an epoxy-functional material containing at least two epoxy groups, such as those disclosed in United States Patent No. 5,653,823. In some cases, such resins contain beta hydroxy ester, imide, or sulfide functionality, incorporated by using dimethylolpropionic acid, phthalimide, or mercaptoglycerine as an additional reactant in the preparation of the resin. Alternatively, the reaction product is that of the diglycidyl ether of Bisphenol A (commercially available from Shell Chemical Company as EPON 880), dimethylol propionic acid, and diethanolamine in a 0.6 to 5.0:0.05 to 5.5:1 mole ratio. Other suitable resinous binders include water soluble and water dispersible polyacrylic acids as disclosed in United States Patent Nos. 3,912,548 and 5,328,525; phenol formaldehyde resins as described in United States Patent Nos. 5,662,746; water soluble polyamides such as those disclosed in WO 95/33869; copolymers of maleic or acrylic acid with allyl ether as described in Canadian patent application 2,087,352; and water soluble and dispersible resins including epoxy resins, aminoplasts, phenol-formaldehyde resins, tannins, and polyvinyl phenols as discussed in United States Patent No. 5,449,415.

In these embodiments of the present invention, the resinous binder is present in the pretreatment composition in an amount of 0.005 percent to 30 percent by weight, such as 0.5 to 3 percent by weight, based on the total weight of the ingredients in the composition.

In other embodiments, however, the pretreatment composition is substantially free or, in some cases, completely free of any resinous binder. As used herein, the term "substantially free", when used with reference to the absence of resinous binder in the pretreatment composition, means that any resinous binder is present in the pretreatment composition in an amount of less than 0.005 percent by weight. As used herein, the term "completely free" means that there is no resinous binder in the pretreatment composition at all.

The pretreatment composition may optionally contain other materials, such as nonionic surfactants and auxiliaries conventionally used in the art of pretreatment. In an aqueous medium, water dispersible organic solvents, for example, alcohols with up to about 8 carbon atoms, such as methanol, isopropanol, and the like, may be present; or glycol ethers such as the monoalkyl ethers of ethylene glycol, diethylene glycol, or propylene glycol, and the like. When present, water dispersible organic solvents are typically used in amounts up to about ten percent by volume, based on the total volume of aqueous medium.

Other optional materials include surfactants that function as defoamers or substrate wetting agents, such as those materials and amounts described earlier with respect to the plating solution.

In certain embodiments, the pretreatment composition also comprises a reaction accelerator, such as nitrite ions, nitro-group containing compounds, hydroxylamine sulfate, persulfate ions, sulfite ions, hyposulfite ions, peroxides, iron (III) ions, citric acid iron compounds, bromate ions, perchlorinate ions, chlorate ions, chlorite ions as well as ascorbic acid, citric acid, tartaric acid, malonic acid, succinic acid and salts thereof. Specific examples of suitable materials and their amounts are described in United States Patent Application Publication No. 2004/0163736 A1 at [0032] to [0041].

In certain embodiments, the pretreatment composition also comprises a filler, such as a siliceous filler. Non-limiting examples of suitable fillers include silica, mica, montmorillonite, kaolinite, asbestos, talc, diatomaceous earth, vermiculite, natural and synthetic zeolites, cement, calcium silicate, aluminum silicate, sodium aluminum silicate, aluminum polysilicate, alumina silica gels, and glass particles. In addition to the siliceous fillers other finely divided particulate substantially water-insoluble fillers may also be employed. Examples of such optional fillers include carbon black, charcoal, graphite, titanium oxide, iron oxide, copper oxide, zinc oxide, antimony oxide, zirconia, magnesia, alumina, molybdenum disulfide, zinc sulfide, barium sulfate, strontium sulfate, calcium carbonate, and magnesium carbonate.

As indicated, in certain embodiments, the pretreatment composition is substantially or, in some cases, completely free of chromate and/or heavy metal phosphate. As used herein, the term "substantially free" when used in reference to the absence of chromate and/or heavy metal phosphate, such as zinc phosphate, in the pretreatment composition means that these substances are not present in the composition to such an extent that they cause a burden on the environment. That is, they are not substantially used and the formation of sludge, such as zinc phosphate, formed in the case of using a treating agent based on zinc phosphate, is eliminated.

Moreover, in certain embodiments, the pretreatment composition is substantially free, or, in some cases, completely free of any organic materials. As used herein, the term "substantially free", when used with reference to the absence of organic materials in the composition, means that any organic materials are present in the composition, if at all, as an incidental impurity. In other words, the presence of any organic material does not affect the properties of the composition. As used herein, the term "completely free" means that there is no organic material in the composition at all.

In certain embodiments, the film coverage of the residue of the pretreatment coating composition generally ranges from 1 to 1000 milligrams per square meter (mg/m²), such as 10 to 400 mg/m². The thickness of the pretreatment coating can vary, but it is generally very thin, often having a thickness of less than 1 micrometer, in some cases it is from 1 to 500 nanometers, and, in yet other cases, it is 10 to 300 nanometers.

Following contact with the pretreatment solution, the substrate may be rinsed with water and dried.

Next, after the pretreatment step, the substrate is contacted with a resin-based post-rinse solution. It has been surprisingly discovered that the use of a post-rinse, in conjunction with the use of an electropositive metal such as copper in the pretreatment solution, increases the throwpower of subsequently applied electrodeposition coatings as compared with the application of the electrodeposition coatings applied to the substrate in the absence of the post-rinse.

As defined herein, the ability for an electrodepositable coating composition to coat interior recesses of a substrate, at a given temperature and voltage, is called "throwpower". A higher "throwpower" means that the electrodepositable coating composition is further "thrown" into the recesses of a recessed substrate. Higher throwpower therefore is synonymous with greater surface coverage on hard to reach recessed areas of a substrate.

Moreover, the use of a post-rinse, as described in the previous paragraphs in conjunction with the use of an electropositive metal such as copper in the pretreatment solution, does not adversely affect the corrosion resistance of the formed panels.

In the context of the present invention, throwpower was evaluated by placing two 4" x 12" pretreated and post-rinsed panels on either side of a 4 mm shim and clamping them together. The shimmed panels were then immersed 27 cm into the electrocoat bath (either a cationic or anionic electrodepositable coating composition bath) and coated to a predetermined thickness. Throwpower readings were recorded as a percentage by measuring the distance (in cm) from the bottom of the back side of the panels to the point where no coating was deposited and dividing that number by 27 cm.

In certain embodiments utilizing a resin based post rinse, the throwpower for the immersion applied electrodepositable coating composition increased at least 6% as compared to the throwpower of the same electrodepositable coating composition applied to the substrate under the same coating conditions in the absence of the post rinse step.

The type of resin-based post rinse utilized is dependent upon the type of electrodepositable coating composition that is subsequently applied to the treated substrate. For pretreated substrates to be coated with a cationically applied electrodeposition coating, the resin-based post-rinse composition is anionic in nature (i.e. an "anionic resin-based post rinse composition"). Conversely, for pretreated substrates to be coated with an anionically applied electrodeposition coating, the resin-based post-rinse composition is cationic in nature (i.e. a "cationic resin-based post rinse composition").

In certain embodiments, the resin-based post rinse solution is formed by dissolving a respective cationic or an anionic resin in water. In certain of these embodiments, the resin solids of the resin-based post rinse solution is from .1 to 10%.

In certain embodiments, the pH of the anionic resin-based post rinse solution is from 1 to 10, such as from 1 to 7.

In certain embodiments, the pH of the cationic resin-based post rinse solution is from 6 to 14.

In certain embodiments, the cationic or anionic resin-based post rinse composition is applied to the pretreated panel by immersing the pretreated panel into the composition for a predetermined period of time, such as, for example, 1 minute, removing the panel, rinsing with deionized water, and drying the panel prior to application of an anionic electrodepositable coating composition.

In certain other embodiments, the cationic resin-based post rinse composition is applied to the pretreated panel via a dry-in-place application. In these embodiments, the composition is sprayed onto the panel and dried without a rinsing step prior to application of a cationic electrodepositable coating composition.

In another exemplary embodiment, the anionic resin-based post rinse composition comprises a phosphatized epoxy resin composition. Exemplary water-based phosphatized epoxy resins that may be utilized include Nupal^{®} 435 F and Nupal 510^{®} R, both commercially available from PPG Industries, Inc.

In certain of these embodiments, the water-based phosphatized epoxy composition has a pH adjusted between 3 and 7. In certain other embodiments, the resin content of the water-based phosphatized epoxy composition is from about 0.1 to 10% resin solids.

In one exemplary embodiment, the cationic resin-based post rinse composition comprises an epoxy-functional material that is reacted with either an alkanolamine, or a mixture of alkanolamines. In certain embodiments, primary or secondary alkanolamines, or mixtures thereof are used. Tertiary alkanolamines or mixtures thereof are also suitable, but the reaction conditions differ when these materials are used. Consequently, tertiary alkanolamines are not typically mixed with primary or secondary alkanolamines.

In certain embodiments, the alkanolamines have alkanol groups containing fewer than about 20 carbon atoms, such as fewer than about 10 carbon atoms. Examples of suitable alkanolamines include methyl ethanolamine, ethylethanolamine, diethanolamine, methylisopropanolamine, ethylisopropanolamine, diisopropanolamine, monoethanolamine, and diisopropanolamine and the like.

In certain embodiments, the tertiary alkanolamines that may be used contain two methyl groups. An example of suitable material is dimethylethanolamine.

In certain embodiments, the epoxy-functional material and the alkanolamines are reacted in a equivalent ratio of from about 5:1 to about 1:4, such as from about 2:1 to about 1:2.

The epoxy-functional material and the alkanolamines can be co-reacted by any of the methods well known to those skilled in the art of polymer synthesis, including solution, emulsion, suspension or dispersion polymerization techniques. In the simplest cases, the alkanolamine is added to the epoxy-functional material at a controlled rate, and they are simply heated together, usually with some diluent, at a controlled temperature. In certain embodiments, the reaction is conducted under a nitrogen blanket or another procedure known to those skilled in the art for reducing the presence of oxygen during the reaction.

The diluent serves to reduce the viscosity of the reaction mixture. Exemplary diluents are water-dispersible organic solvents. Examples include alcohols with up to about eight carbon atoms, such as methanol or isopropanol, and the like; or glycol ethers such as the monoalkyl ethers of ethylene glycol, diethylene glycol, or propylene glycol, and the like. Water is also a suitable diluent.

Other suitable diluents include nonreactive oligomeric or polymeric materials with a viscosity ranging from about 20 centipoise to about 1,000 centipoise, as measured with a Brookfield viscometer at about 72° F. (22,2°C) ; and a glass transition temperature lower than about 35° C., as measured by any of the common thermal analytical methods well known by those skilled in the art. Examples include plasticizers such as tributyl phosphate, dibutyl maleate, butyl benzyl phthalate, and the like known to those skilled in the art; and silane compounds such as vinyl trimethoxy silane, gamma-methacryloxypropyl trimethoxy silane, and the like known to those skilled in the art. Mixtures of any of these alternative diluents, water, or organic solvents are suitable as well.

If a tertiary alkanolamine is used, a quaternary ammonium compound is formed. In this case, it is the usual practice to add all the raw materials to the reaction vessel at once and heat them together, usually with some diluent, at a controlled temperature. Typically, some acid is present, which serves to ensure that a quaternary ammonium salt is formed instead of a quaternary ammonium oxide. Examples of suitable acids are carboxylic acids such as lactic acid, citric acid, adipic acid, and the like. Acetic acid is preferred. The quaternary ammonium salts are preferred because these are more easily dispersed in water, and because they produce an aqueous dispersion with a pH in or near the desired range. If, instead, a quaternary ammonium oxide is prepared, it can later be converted to a quaternary ammonium salt with the addition of acid.

The molecular weight of epoxy-functional material that is reacted with either an alkanolamine is limited only by its dispersibility in the other materials comprising the non-chrome post-rinse composition. The dispersibility is determined, in part, by the nature of the epoxy-functional material, the nature of the alkanolamine, and the equivalent ratio in which the two are reacted. Typically, the epoxy-functional material that is reacted with either an alkanolamine has a number-average molecular weight of up to about 1500, as measured by gel permeation chromatography using polystyrene as a standard.

Optionally, the epoxy-functional material that is reacted with either an alkanolamine can be neutralized to promote good dispersion in an aqueous medium. Typically, this is accomplished by adding some acid. Examples of suitable neutralizing acids include lactic acid, phosphoric, acetic acid, and the like known to those skilled in the art.

The epoxy-functional material that is reacted with either an alkanolamine is present in the cationic post-rinse composition at a level of at least about 100 ppm, such as from about 400 ppm to about 1400 ppm, the concentration based on the solid weight of the epoxy-functional material that is reacted with either an alkanolamine on the total weight of the cationic post-rinse composition.

In a related embodiment, the cationic resin-based post rinse comprises an amine adduct of Epon^{®} 828 that may be formed as the reaction product of diethanolamine and Epon^{®} 828, and in certain embodiments may be made in accordance with the method disclosed in Example 1 of U.S. Patent No. 5,653,823 (without the subsequent preparation with 5% fluorozirconic acid).

In one exemplary embodiment, the cationic resin-based post rinse composition comprises a trisaminoepoxy compound.

In certain embodiments of the methods of the present invention, after the substrate is contacted with the pretreatment composition and the resin-based post rinse, it is then contacted with an electrodepositable coating composition. The electrodepositable coating compositions are either cationic, when the post-rinse is an anionic resin-based post rinse as described above, or anionic, when the post-rinse is a cationic resin-based post rinse. In either case, the electrodepositable coating composition comprises a film-forming resin.

As used herein, the term "film-forming resin" refers to resins that can form a self-supporting continuous film on at least a horizontal surface of a substrate upon removal of any diluents or carriers present in the composition or upon curing at ambient or elevated temperature. Conventional film-forming resins that may be used include, without limitation, those typically used in automotive OEM coating compositions, automotive refinish coating compositions, industrial coating compositions, architectural coating compositions, coil coating compositions, and aerospace coating compositions, among others.

In certain embodiments, the coating composition comprises a thermosetting film-forming resin. As used herein, the term "thermosetting" refers to resins that "set" irreversibly upon curing or crosslinking, wherein the polymer chains of the polymeric components are joined together by covalent bonds. This property is usually associated with a cross-linking reaction of the composition constituents often induced, for example, by heat or radiation. Curing or crosslinking reactions also may be carried out under ambient conditions. Once cured or crosslinked, a thermosetting resin will not melt upon the application of heat and is insoluble in solvents. In other embodiments, the coating composition comprises a thermoplastic film-forming resin. As used herein, the term "thermoplastic" refers to resins that comprise polymeric components that are not joined by covalent bonds and thereby can undergo liquid flow upon heating and are soluble in solvents.

As previously indicated, in certain embodiments, the substrate is contacted with a coating composition comprising a film-forming resin by an electrocoating step wherein an electrodepositable composition is deposited onto the metal substrate by electrodeposition. In the process of electrodeposition, the metal substrate being treated, serving as an electrode, and an electrically conductive counter electrode are placed in contact with an ionic, electrodepositable composition. Upon passage of an electric current between the electrode and counter electrode while they are in contact with the electrodepositable composition, an adherent film of the electrodepositable composition will deposit in a substantially continuous manner on the metal substrate.

Electrodeposition is usually carried out at a constant voltage in the range of from 1 volt to several thousand volts, typically between 50 and 500 volts. Current density is usually between 1.0 ampere and 15 amperes per square foot (10.8 to 161.5 amperes per square meter) and tends to decrease quickly during the electrodeposition process, indicating formation of a continuous self-insulating film.

The electrodepositable composition utilized in certain embodiments of the present invention often comprises a resinous phase dispersed in an aqueous medium wherein the resinous phase comprises: (a) an active hydrogen group-containing ionic electrodepositable resin, and (b) a curing agent having functional groups reactive with the active hydrogen groups of (a).

In certain embodiments, the electrodepositable compositions utilized in certain embodiments of the present invention contain, as a main film-forming polymer, an active hydrogen-containing ionic, often cationic, electrodepositable resin. A wide variety of electrodepositable film-forming resins are known and can be used in the present invention so long as the polymers are "water dispersible," i.e., adapted to be solubilized, dispersed or emulsified in water. The water dispersible polymer is ionic in nature, that is, the polymer will contain anionic functional groups to impart a negative charge or, as is often preferred, cationic functional groups to impart a positive charge.

Examples of film-forming resins suitable for use in anionic electrodepositable compositions are base-solubilized, carboxylic acid containing polymers, such as the reaction product or adduct of a drying oil or semi-drying fatty acid ester with a dicarboxylic acid or anhydride; and the reaction product of a fatty acid ester, unsaturated acid or anhydride and any additional unsaturated modifying materials which are further reacted with polyol. Also suitable are the at least partially neutralized interpolymers of hydroxy-alkyl esters of unsaturated carboxylic acids, unsaturated carboxylic acid and at least one other ethylenically unsaturated monomer. Still another suitable electrodepositable film-forming resin comprises an alkyd-aminoplast vehicle, i.e., a vehicle containing an alkyd resin and an amine-aldehyde resin. Yet another anionic electrodepositable resin composition comprises mixed esters of a resinous polyol, such as is described in United States Patent No. 3,749,657 at col. 9, lines 1 to 75 and col. 10, lines 1 to 13. Other acid functional polymers can also be used, such as phosphatized polyepoxide or phosphatized acrylic polymers as are known to those skilled in the art.

As aforementioned, it is often desirable that the active hydrogen-containing ionic electrodepositable resin (a) is cationic and capable of deposition on a cathode. Examples of such cationic film-forming resins include amine salt group-containing resins, such as the acid-solubilized reaction products of polyepoxides and primary or secondary amines, such as those described in United States Patent Nos. 3,663,389; 3,984,299; 3,947,338; and 3,947,339. Often, these amine salt group-containing resins are used in combination with a blocked isocyanate curing agent. The isocyanate can be fully blocked, as described in United States Patent No. 3,984,299, or the isocyanate can be partially blocked and reacted with the resin backbone, such as is described in United States Patent No. 3,947,338. Also, one-component compositions as described in United States Patent No. 4,134,866 and DE-OS No. 2,707,405 can be used as the film-forming resin. Besides the epoxy-amine reaction products, film-forming resins can also be selected from cationic acrylic resins, such as those described in United States Patent Nos. 3,455,806 and 3,928,157.

Besides amine salt group-containing resins, quaternary ammonium salt group-containing resins can also be employed, such as those formed from reacting an organic polyepoxide with a tertiary amine salt as described in United States Patent Nos. 3,962,165; 3,975,346; and 4,001,101. Examples of other cationic resins are ternary sulfonium salt group-containing resins and quaternary phosphonium salt-group containing resins, such as those described in United States Patent Nos. 3,793,278 and 3,984,922, respectively. Also, film-forming resins which cure via transesterification, such as described in European Application No. 12463 can be used. Further, cationic compositions prepared from Mannich bases, such as described in United States Patent No. 4,134,932, can be used.

In certain embodiments, the resins present in the electrodepositable composition are positively charged resins which contain primary and/or secondary amine groups, such as described in United States Patent Nos. 3,663,389; 3,947,339; and 4,116,900. In United States Patent No. 3,947,339, a polyketimine derivative of a polyamine, such as diethylenetriamine or triethylenetetraamine, is reacted with a polyepoxide. When the reaction product is neutralized with acid and dispersed in water, free primary amine groups are generated. Also, equivalent products are formed when polyepoxide is reacted with excess polyamines, such as diethylenetriamine and triethylenetetraamine, and the excess polyamine vacuum stripped from the reaction mixture, as described in United States Patent Nos. 3,663,389 and 4,116,900.

In certain embodiments, the active hydrogen-containing ionic electrodepositable resin is present in the electrodepositable composition in an amount of 1 to 60 percent by weight, such as 5 to 25 percent by weight, based on total weight of the electrodeposition bath.

As indicated, the resinous phase of the electrodepositable composition often further comprises a curing agent adapted to react with the active hydrogen groups of the ionic electrodepositable resin. For example, both blocked organic polyisocyanate and aminoplast curing agents are suitable for use in the present invention, although blocked isocyanates are often preferred for cathodic electrodeposition.

Aminoplast resins, which are often the preferred curing agent for anionic electrodeposition, are the condensation products of amines or amides with aldehydes. Examples of suitable amine or amides are melamine, benzoguanamine, urea and similar compounds. Generally, the aldehyde employed is formaldehyde, although products can be made from other aldehydes, such as acetaldehyde and furfural. The condensation products contain methylol groups or similar alkylol groups depending on the particular aldehyde employed. Often, these methylol groups are etherified by reaction with an alcohol, such as a monohydric alcohol containing from 1 to 4 carbon atoms, such as methanol, ethanol, isopropanol, and n-butanol. Aminoplast resins are commercially available from American Cyanamid Co. under the trademark CYMEL and from Monsanto Chemical Co. under the trademark RESIMENE.

The aminoplast curing agents are often utilized in conjunction with the active hydrogen containing anionic electrodepositable resin in amounts ranging from 5 percent to 60 percent by weight, such as from 20 percent to 40 percent by weight, the percentages based on the total weight of the resin solids in the electrodepositable composition.

As indicated, blocked organic polyisocyanates are often used as the curing agent in cathodic electrodeposition compositions. The polyisocyanates can be fully blocked as described in United States Patent No. 3,984,299 at col. 1, lines 1 to 68, col. 2, and col. 3, lines 1 to 15, or partially blocked and reacted with the polymer backbone as described in United States Patent No. 3,947,338 at col. 2, lines 65 to 68, col. 3, and col. 4 lines 1 to 30. By "blocked" is meant that the isocyanate groups have been reacted with a compound so that the resultant blocked isocyanate group is stable to active hydrogens at ambient temperature but reactive with active hydrogens in the film forming polymer at elevated temperatures usually between 90°C and 200°C.

Suitable polyisocyanates include aromatic and aliphatic polyisocyanates, including cycloaliphatic polyisocyanates and representative examples include diphenylmethane-4,4'-diisocyanate (MDI), 2,4- or 2,6-toluene diisocyanate (TDI), including mixtures thereof, p-phenylene diisocyanate, tetramethylene and hexamethylene diisocyanates, dicyclohexylmethane-4,4'-diisocyanate, isophorone diisocyanate, mixtures of phenylmethane-4,4'-diisocyanate and polymethylene polyphenylisocyanate. Higher polyisocyanates, such as triisocyanates can be used. An example would include triphenylmethane-4,4',4"-triisocyanate. Isocyanate ( )-prepolymers with polyols such as neopentyl glycol and trimethylolpropane and with polymeric polyols such as polycaprolactone diols and triols (NCO/OH equivalent ratio greater than 1) can also be used.

The polyisocyanate curing agents are typically utilized in conjunction with the active hydrogen containing cationic electrodepositable resin in amounts ranging from 5 percent to 60 percent by weight, such as from 20 percent to 50 percent by weight, the percentages based on the total weight of the resin solids of the electrodepositable composition.

In certain embodiments, the coating composition comprising a film-forming resin also comprises yttrium. In certain embodiments, yttrium is present in such compositions in an amount from 10 to 10,000 ppm, such as not more than 5,000 ppm, and, in some cases, not more than 1,000 ppm, of total yttrium (measured as elemental yttrium).

Both soluble and insoluble yttrium compounds may serve as the source of yttrium. Examples of yttrium sources suitable for use in lead-free electrodepositable coating compositions are soluble organic and inorganic yttrium salts such as yttrium acetate, yttrium chloride, yttrium formate, yttrium carbonate, yttrium sulfamate, yttrium lactate and yttrium nitrate. When the yttrium is to be added to an electrocoat bath as an aqueous solution, yttrium nitrate, a readily available yttrium compound, is a preferred yttrium source. Other yttrium compounds suitable for use in electrodepositable compositions are organic and inorganic yttrium compounds such as yttrium oxide, yttrium bromide, yttrium hydroxide, yttrium molybdate, yttrium sulfate, yttrium silicate, and yttrium oxalate. Organoyttrium complexes and yttrium metal can also be used. When the yttrium is to be incorporated into an electrocoat bath as a component in the pigment paste, yttrium oxide is often the preferred source of yttrium.

The electrodepositable compositions described herein are in the form of an aqueous dispersion. The term "dispersion" is believed to be a two-phase transparent, translucent or opaque resinous system in which the resin is in the dispersed phase and the water is in the continuous phase. The average particle size of the resinous phase is generally less than 1.0 and usually less than 0.5 micrometer, often less than 0.15 micrometer.

The concentration of the resinous phase in the aqueous medium is often at least 1 percent by weight, such as from 2 to 60 percent by weight, based on total weight of the aqueous dispersion. When such compositions are in the form of resin concentrates, they generally have a resin solids content of 20 to 60 percent by weight based on weight of the aqueous dispersion.

The electrodepositable compositions described herein are often supplied as two components: (1) a clear resin feed, which includes generally the active hydrogen-containing ionic electrodepositable resin, i.e., the main film-forming polymer, the curing agent, and any additional water-dispersible, non-pigmented components; and (2) a pigment paste, which generally includes one or more pigments, a water-dispersible grind resin which can be the same or different from the main-film forming polymer, and, optionally, additives such as wetting or dispersing aids. Electrodeposition bath components (1) and (2) are dispersed in an aqueous medium which comprises water and, usually, coalescing solvents.

As aforementioned, besides water, the aqueous medium may contain a coalescing solvent. Useful coalescing solvents are often hydrocarbons, alcohols, esters, ethers and ketones. The preferred coalescing solvents are often alcohols, polyols and ketones. Specific coalescing solvents include isopropanol, butanol, 2-ethylhexanol, isophorone, 2-methoxypentanone, ethylene and propylene glycol and the monoethyl monobutyl and monohexyl ethers of ethylene glycol. The amount of coalescing solvent is generally between 0.01 and 25 percent, such as from 0.05 to 5 percent by weight based on total weight of the aqueous medium.

In addition, a colorant and, if desired, various additives such as surfactants, wetting agents or catalyst can be included in the coating composition comprising a film-forming resin. As used herein, the term "colorant" means any substance that imparts color and/or other opacity and/or other visual effect to the composition. The colorant can be added to the composition in any suitable form, such as discrete particles, dispersions, solutions and/or flakes. A single colorant or a mixture of two or more colorants can be used.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black and mixtures thereof. The terms "pigment" and "colored filler" can be used interchangeably.

Example dyes include, but are not limited to, those that are solvent and/or aqueous based such as pthalo green or blue, iron oxide, bismuth vanadate, anthraquinone, perylene, aluminum and quinacridone.

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemical, Inc.

As noted above, the colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions can include colorants such as pigments or dyes having a particle size of less than 150 nm, such as less than 70 nm, or less than 30 nm. Nanoparticles can be produced by milling stock organic or inorganic pigments with grinding media having a particle size of less than 0.5 mm. Example nanoparticle dispersions and methods for making them are identified in U.S. Patent No. 6,875,800 B2. Nanoparticle dispersions can also be produced by crystallization, precipitation, gas phase condensation, and chemical attrition (i.e., partial dissolution). In order to minimize re-agglomeration of nanoparticles within the coating, a dispersion of resin-coated nanoparticles can be used. As used herein, a "dispersion of resin-coated nanoparticles" refers to a continuous phase in which is dispersed discreet "composite microparticles" that comprise a nanoparticle and a resin coating on the nanoparticle. Example dispersions of resin-coated nanoparticles and methods for making them are identified in United States Patent Application Publication 2005-0287348 A1, filed June 24, 2004, U.S. Provisional Application No. 60/482,167 filed June 24, 2003, and United States Patent Application Serial No. 11/337,062, filed January 20, 2006.

Example special effect compositions that may be used include pigments and/or compositions that produce one or more appearance effects such as reflectance, pearlescence, metallic sheen, phosphorescence, fluorescence, photochromism, photosensitivity, thermochromism, goniochromism and/or color-change. Additional special effect compositions can provide other perceptible properties, such as opacity or texture. In certain embodiments, special effect compositions can produce a color shift, such that the color of the coating changes when the coating is viewed at different angles. Example color effect compositions are identified in U.S. Patent No. 6,894,086. Additional color effect compositions can include transparent coated mica and/or synthetic mica, coated silica, coated alumina, a transparent liquid crystal pigment, a liquid crystal coating, and/or any composition wherein interference results from a refractive index differential within the material and not because of the refractive index differential between the surface of the material and the air.

In certain embodiments, a photosensitive composition and/or photochromic composition, which reversibly alters its color when exposed to one or more light sources, can be used in the present invention. Photochromic and/or photosensitive compositions can be activated by exposure to radiation of a specified wavelength. When the composition becomes excited, the molecular structure is changed and the altered structure exhibits a new color that is different from the original color of the composition. When the exposure to radiation is removed, the photochromic and/or photosensitive composition can return to a state of rest, in which the original color of the composition returns. In certain embodiments, the photochromic and/or photosensitive composition can be colorless in a non-excited state and exhibit a color in an excited state. Full color-change can appear within milliseconds to several minutes, such as from 20 seconds to 60 seconds. Example photochromic and/or photosensitive compositions include photochromic dyes.

In certain embodiments, the photosensitive composition and/or photochromic composition can be associated with and/or at least partially bound to, such as by covalent bonding, a polymer and/or polymeric materials of a polymerizable component. In contrast to some coatings in which the photosensitive composition may migrate out of the coating and crystallize into the substrate, the photosensitive composition and/or photochromic composition associated with and/or at least partially bound to a polymer and/or polymerizable component in accordance with certain embodiments of the present invention, have minimal migration out of the coating. Example photosensitive compositions and/or photochromic compositions and methods for making them are identified in U.S. Application Serial No. 10/892,919 filed July 16, 2004.

In general, the colorant can be present in the coating composition in any amount sufficient to impart the desired visual and/or color effect. The colorant may comprise from 1 to 65 weight percent, such as from 3 to 40 weight percent or 5 to 35 weight percent, with weight percent based on the total weight of the compositions.

After deposition, the coating is often heated to cure the deposited composition. The heating or curing operation is often carried out at a temperature in the range of from 120 to 250°C, such as from 120 to 190°C for a period of time ranging from 10 to 60 minutes. In certain embodiments, the thickness of the resultant film is from 10 to 50 micrometers.

As will be appreciated by the foregoing description, the present invention is directed to methods for coating a metal substrate comprising: (a) contacting the substrate with a pretreatment composition comprising a group IIIB metal and/or a group IVB metal, (b) contacting the substrate with a resin-based post rinse composition that comprises either an anionic or cationic resin-based post rinse composition, (c) electrophoretically depositing either an anionic or cationic electrodepositable coating composition onto the substrate, wherein an anionic electrodepositable coating composition is utilized in conjunction with the cationic resin-based post rinse composition and wherein a cationic electrodepositable coating composition is utilized in conjunction with the anionic resin-based post rinse composition.

In certain embodiments, the three steps (a), (b) and (c) are done sequentially without any intervening steps or processes. In certain other embodiments, one or more intervening steps or processes may occur between any of steps (a), (b) and/or (c).

In certain embodiments, step (b) occurs immediately after step (a), and in certain other embodiments step (c) occurs immediately after step (b) and/or after step (a). In still other embodiments, step (c) occurs immediately after step (b) which itself occurs immediately after step (a).

These methods of the present invention do not include depositing a zinc phosphate or chromate-containing coating on the substrate.

As has been indicated throughout the foregoing description, the methods and coated substrates of the present invention, in certain embodiments, do not include the deposition of a heavy metal phosphate, such as zinc phosphate, or a chromate. As a result, the environmental drawbacks associated with such materials is avoided. Nevertheless, the methods of the present invention have been shown to provide coated substrates that are, in at least some cases, resistant to corrosion at a level comparable to, in some cases even superior to (as illustrated in the Examples), methods wherein such materials are used. This is a surprising and unexpected discovery of the present invention and satisfies a long felt need in the art. In addition, the methods of the present invention have been shown to avoid the discoloration of subsequently applied coatings, such as certain non-black electrodeposited coatings.

Illustrating the invention are the following examples that are not to be considered as limiting the invention to their details. All parts and percentages in the examples, as well as throughout the specification, are by weight unless otherwise indicated.

### EXAMPLE 1

Coating compositions were prepared as follows:
**Cleaner 1:** Chemkleen 166 HP/171ALF, alkaline cleaner, commercially available from PPG Industries, Inc.
**Pretreatment 1:** CHEMFOS 700/CHEMSEAL 59, immersion applied tricationic Zn phosphate and sealer, commercially available from PPG Industries, Inc.
**Pretreatment 2:** ZIRCOBOND^{®}, immersion applied zirconium pretreatment, commercially available from PPG Industries, Inc.
**Post Rinse 1:** Resin containing post rinse zirconium pretreatment based on a phosphatized (anionic) epoxy polymer in an aqueous solution is prepared by dissolving
   2% (w/w) Nupal^{®}510R (commercially available from PPG Industries, Inc.) in 5 gal of H₂O, with a pH = 3.
**Post Rinse 2:** Resin containing post rinse zirconium pretreatment based on a phosphatized (anionic) epoxy polymer in an aqueous solution is prepared by dissolving 2% (w/w) Nupal^{®}435F (commercially available from PPG Industries, Inc.) in 5 gal of H₂O, with a pH = 3.
**Post Rinse 3:** Resin containing post rinse zirconium pretreatment based on an amine adduct of EPON 828 (cationic) polymer in an aqueous solution prepared by dissolving 2% (w/w) amine adduct of EPON 828 in 5 gal of H₂O, with a pH = 10.4.
**Post Rinse 4:** Resin containing dry-in-place coating for a zirconium pretreatment based on a phosphatized (anionic) epoxy polymer in an aqueous solution prepared by dissolving 0.1% (w/w) Nupal^{®}510R (commercially available from PPG Industries, Inc.) in 5 gal of H₂O, with a pH=4.
**Post Rinse 5:** Deionized water post rinse.
**Paint 1:** ED6060CZ, a cathodic electrocoat commercially available from PPG Industries.
**Paint 2:** AEROCRON CF, an anionic electrocoat commercially available from PPG Industries.

### Example 1: Evaluation of Throwpower of Anionic or Cationic Electrodepositable Coating Composition for Various Pretreatment/Post Rinse Systems

In this example, Post Rinses 1-5 were evaluated to determine the throwpower of subsequently applied anionic or cationic electrodepositable coatings.

In this test, the panels were prepared as follows:

### Step 1: Cleaning and Pretreatment

The coating systems were cleaned using Cleaner 1, rinsed with deionized water, and pretreated at 27 °C in with either Pretreatment 1 or Pretreatment 2 for 2 minutes. The panels were then rinsed with deionized water.

### Step 2: Application of Post Rinse

Next, for Post Rinses 1-3 and 5, respectively, the panels were immersed in the post rinse solution for 1 minute and rinsed with deionized water. The panels were then dried by for 5 minutes at 55 °C using forced air.

For Post Rinse 4, the cleaned and pretreated panels were misted (i.e. coated) with Post Rinse 4. The panels were then dried by for 5 minutes at 55 °C using forced air.

### Step 3: Application of Electrodepositable Coating Composition

Next, two 4" x 12" pretreated and post-rinsed panels as prepared in Steps 1 and 2 above are placed on either side of a 4 mm shim and clamped together. The shimmed panels are immersed 27 cm into the electrocoat bath (either Paint 1 or Paint 2) and coated as described below. Throwpower readings are recorded as a percentage by measuring the distance (in cm) from the bottom of the back side of the panels to the point where no coating was deposited and dividing that number by 27 cm.

Paint 1 was electrophoretically applied to the panels at 0.0008-0.0010 inches and cured for 25 minutes at 175°C in an electric oven.

Paint 2 was electrophoretically applied to the panels at 0.0008-0.0010 inches and cured for 30 minutes at 93°C in an electric oven.

The results are shown in Table 1 below:

**Table 1 - Throwpower Performance**

| **Pretreatment /Post Rinse** | **Paint 1, % Throwpower** | **Paint 2, % Throwpower** |
|---|---|---|
| Pretreatment 1/Post Rinse 5 | 69 | 34 |
| Pretreatment 2/Post Rinse 1 | 67 | 32 |
| Pretreatment 2/Post Rinse 2 | 66 | 32 |
| Pretreatment 2/Post Rinse 3 | 55 | 38 |
| Pretreatment 2/Post Rinse 4 | 67 | 31 |
| Pretreatment 2/Post Rinse 5 | 56 | 30 |

As Table 1 confirms, the anionic post rinse compositions of the present invention (Post Rinses 1, 2 and 4) applied after Pretreatment 2 provided increased throwpower for a subsequently applied cationic electrodepositable coating composition (Paint 1) as compared to a deionized water post rinse (Post Rinse 5) and had comparable throwpower to a zinc phosphate pretreatment system (Pretreatment 1 with Post Rinse 5). The table also confirms that the application of an cationic post rinse composition (Post Rinse 3) followed by the deposition of the cationic electrodepositable coating composition (Paint 2) had virtually no effect on throwpower as compared to a deionized water post rinse (Post Rinse 5).

In addition, the cationic post rinse compositions of the present invention (Post Rinse 3) provided increased throwpower for a subsequently applied anionic electrodepositable coating composition (Paint 2) as compared to a deionized water post rinse (Post Rinse 5) and increased throwpower to a zinc phosphate pretreatment system (Pretreatment 1 with Post Rinse 5). The table also confirms that the application of an anionic post rinse composition (Post Rinses 1, 2 and 4) followed by the deposition of the anionic electrodepositable coating composition had virtually no effect on throwpower as compared to a deionized water post rinse (Post Rinse 5).

### Example 2: Evaluation of Corrosion Performance of Anionic or Cationic Electrodepositable Coating Composition for Various Pretreatment/Post Rinse Systems

In this example, the electrodepo sited panels of Example 1 were also evaluated for corrosion performance. The test procedure was performed using 40 cycles of GM-9511P and measuring the. The results are shown in Table 2.

**Table 2. Corrosion Performance - GM9511P 40 cycles, mm**

| **Pretreatment /Post Rinse** | **Paint 1** | **Paint 2** |
|---|---|---|
| Pretreatment 1/Post Rinse 5 | 5.5 | 2.7 |
| Pretreatment 2/Post Rinse 1 | 7.6 | 6.4 |
| Pretreatment 2/Post Rinse 2 | 8.1 | 9.7 |
| Pretreatment 2/Post Rinse 3 | 7.3 | 7.9 |
| Pretreatment 2/Post Rinse 4 | 9.4 | 8.2 |
| Pretreatment 2/Post Rinse 5 | 8.2 | 8.0 |

As Table 2 confirms, the anionic post rinse compositions of the present invention (Post Rinses 1, 2 and 4) applied after Pretreatment 2 provided comparable corrosion resistance for a subsequently applied cationic electrodepositable coating composition (Paint 1) as compared to a deionized water post rinse (Post Rinse 5).

In addition, the catonic post rinse compositions of the present invention (Post Rinse 3) provided comparable corrosion resistance for a subsequently applied anionic electrodepositable coating composition (Paint 2) as compared to a deionized water post rinse (Post Rinse 5).

It will be appreciated by those skilled in the art that changes could be made to the embodiments described above without departing from the broad inventive concept thereof. It is understood, therefore, that this invention is not limited to the particular embodiments disclosed, but it is intended to cover modifications which are within the scope of the invention, as defined by the appended claims.

## Claims

1. A method for coating a substrate comprising:
(a) contacting the substrate with a pretreatment solution comprising a group IIIB metal and/or a group IVB metal and an electropositive metal (a metal that is more electropositive than the metallic substrate);
(b) contacting the substrate with an anionic resin-based post rinse composition comprising an anionic resin; and
(c) electrophoretically depositing a cationic electrodepositable coating composition onto the substrate.

2. A method for coating a substrate comprising:
(a) contacting the substrate with a pretreatment solution comprising a group III8 and/or a group IVB metal and an electropositive metal (a metal that is more electropositive than the metallic substrate);
(b) contacting the substrate with an cationic resin-based post rinse composition comprising a cationic resin; and
(c) electrophoretically depositing an anionic electrodepositable coating composition onto the substrate.

3. The method of any of Claim 1 or 2, wherein step (a) occurs before step (b) and wherein step (b) occurs before step (c).

4. The method of any of Claim 1 or 2, wherein said group IIIB metal and/or a group IVB metal comprises zirconium.

5. The method of any of Claim 1 or 2, wherein said group IIIB metal and/or group IVB metal comprises a group IIIB metal compound and/or a group IVB metal compound.

6. The method of Claim 5, wherein said group IVB metal compound comprises a zirconium compound

7. The method of Claim 1, wherein said anionic resin comprises a phosphatized epoxy resin.

8. The method of Claim 1, wherein step (b) comprises:
immersing the substrate in a bath comprising the anionic resin-based post rinse composition;
removing the substrate from said bath; and
rinsing the substrate with water.

9. The method of Claim 1, wherein step (b) comprises:
spraying the substrate with the anionic resin-based post rinse composition;
and
drying the anionic resin-based post rinse composition onto the substrate prior to step (c).

10. The method of Claim 2, wherein said cationic resin comprises a trisaminoepoxy resin.

11. The method of Claim 2, wherein step (b) comprises:
immersing the substrate in a bath comprising the cationic resin-based post rinse composition;
removing the substrate from said bath; and
rinsing the substrate with water.

12. The method of Claim 2, wherein said cationic resin comprises an amine adduct of an epoxy resin.

13. A coated substrate coated according to the method of Claim 1 or 2.

## Patentansprüche

1. Verfahren zur Beschichtung eines Substrats, umfassend:
(a) In-Kontakt-Bringen des Substrats mit einer Vorbehandlungslösung, die ein Gruppe-IIIB-Metall und/oder ein Gruppe-IVB-Metall und ein elektropositives Metall (ein Metall, das elektropositiver als das metallische Substrat ist) enthält,
(b) In-Kontakt-Bringen des Substrats mit einer Nachspülzusammensetzung auf Basis eines anionischen Harzes, die ein anionisches Harz enthält, und
(c) elektrophoretisches Abscheiden einer kationischen elektrophoretisch abscheidbaren Beschichtungszusammensetzung auf dem Substrat.

2. Verfahren zur Beschichtung eines Substrats, umfassend:
(a) In-Kontakt-Bringen des Substrats mit einer Vorbehandlungslösung, die ein Gruppe-IIIB-Metall und/oder ein Gruppe-IVB-Metall und ein elektropositives Metall (ein Metall, das elektropositiver als das metallische Substrat ist) enthält,
(b) In-Kontakt-Bringen des Substrats mit einer Nachspülzusammensetzung auf Basis eines kationischen Harzes, die ein kationisches Harz enthält, und
(c) elektrophoretisches Abscheiden einer anionischen elektrophoretisch abscheidbaren Beschichtungszusammensetzung auf dem Substrat.

3. Verfahren nach einem der Ansprüche 1 oder 2, wobei Schritt (a) vor Schritt (b) stattfindet und wobei Schritt (b) vor Schritt (c) stattfindet.

4. Verfahren nach einem der Ansprüche 1 oder 2, wobei dieses Gruppe-IIIB-Metall und/oder ein Gruppe-IV-Metall Zirconium enthält.

5. Verfahren nach einem der Ansprüche 1 oder 2, wobei dieses Gruppe-IIIB-Metall und/oder Gruppe-IVB-Metall eine Gruppe-IIIB-Metallverbindung und/oder eine Gruppe-IVB-Metallverbindung umfasst.

6. Verfahren nach Anspruch 5, wobei diese Gruppe IVB Metallverbindung eine Zirconiumverbindung enthält.

7. Verfahren nach Anspruch 1, wobei dieses anionische Harz ein phosphatiertes Epoxyharz enthält.

8. Verfahren nach Anspruch 1, wobei Schritt (b) umfasst:
Eintauchen des Substrats in ein Bad, das die Nachspülzusammensetzung auf Basis eines anionischen Harzes enthält,
Entfernen des Substrats aus diesem Bad und
Spülen des Substrats mit Wasser.

9. Verfahren nach Anspruch 1, wobei Schritt (b) umfasst:
Besprühen des Substrats mit der Nachspülzusammensetzung auf Basis eines anionischen Harzes und
Trocknen der Nachspülzusammensetzung auf Basis eines anionischen Harz auf dem Substrat vor Schritt (c).

10. Verfahren nach Anspruch 2, wobei das kationische Harz ein Trisaminoepoxyharz enthält.

11. Verfahren nach Anspruch 2, wobei Schritt (b) umfasst:
Eintauchen des Substrats in ein Bad, das die Nachspülzusammensetzung auf Basis eines kationischen Harzes enthält,
Entfernen des Substrats aus dem Bad und
Spülen des Substrats mit Wasser.

12. Verfahren nach Anspruch 2, wobei dieses kationische Harz ein Aminaddukt eines Epoxyharzes enthält.

13. Beschichtetes Substrat, beschichtet gemäß dem Verfahren nach Anspruch 1 oder 2.

## Revendications

1. Procédé de revêtement d'un substrat, comportant les étapes suivantes :
a) mettre le substrat en contact avec une solution de prétraitement comprenant un métal du groupe IIIB et/ou un métal du groupe IVB, ainsi qu'un métal électropositif (un métal plus électropositif que le substrat métallique) ;
b) mettre le substrat en contact avec une composition anionique de rinçage à base de résine, comprenant une résine anionique ;
c) et déposer par électrophorèse, sur le substrat, une composition cationique de revêtement électro-déposable.

2. Procédé de revêtement d'un substrat, comportant les étapes suivantes :
a) mettre le substrat en contact avec une solution de prétraitement comprenant un métal du groupe IIIB et/ou un métal du groupe IVB, ainsi qu'un métal électropositif (un métal plus électropositif que le substrat métallique) ;
b) mettre le substrat en contact avec une composition cationique de rinçage à base de résine, comprenant une résine cationique ;
c) et déposer par électrophorèse, sur le substrat, une composition anionique de revêtement électro-déposable.

3. Procédé conforme à la revendication 1 ou 2, dans lequel l'étape (a) intervient avant l'étape (b) et l'étape (b) intervient avant l'étape (c).

4. Procédé conforme à la revendication 1 ou 2, dans lequel ledit ou lesdits métal du groupe IIIB et/ou métal du groupe IVB comprend ou comprennent du zirconium.

5. Procédé conforme à la revendication 1 ou 2, dans lequel ledit ou lesdits métal du groupe IIIB et/ou métal du groupe IVB comprend ou comprennent un composé d'un métal du groupe IIIB et/ou un composé d'un métal du groupe IVB.

6. Procédé conforme à la revendication 5, dans lequel ledit composé d'un métal du groupe IVB comprend un composé du zirconium.

7. Procédé conforme à la revendication 1, dans lequel ladite résine anionique comprend une résine époxy phosphatée.

8. Procédé conforme à la revendication 1, dans lequel l'étape (b) comprend les opérations suivantes :
- immerger le substrat dans un bain comprenant la composition anionique de rinçage à base de résine,
- retirer le substrat de ce bain,
- et rincer le substrat avec de l'eau.

9. Procédé conforme à la revendication 1, dans lequel l'étape (b) comprend les opérations suivantes :
- pulvériser sur le substrat la composition anionique de rinçage à base de résine,
- et faire sécher la composition anionique de rinçage à base de résine sur le substrat, avant l'étape (c).

10. Procédé conforme à la revendication 2, dans lequel ladite résine cationique comprend une résine trisamino-époxy.

11. Procédé conforme à la revendication 2, dans lequel l'étape (b) comprend les opérations suivantes :
- immerger le substrat dans un bain comprenant la composition cationique de rinçage à base de résine,
- retirer le substrat de ce bain,
- et rincer le substrat avec de l'eau.

12. Procédé conforme à la revendication 2, dans lequel ladite résine cationique comprend un produit d'addition d'amine sur résine époxy.

13. Substrat revêtu par un procédé conforme à la revendication 1 ou 2.
